(19) Europäisches Patentamt

European Patent Office

Office européen des brevets

(11) **EP 1 434 378 A2**

(12) **EUROPEAN PATENT APPLICATION**

(43) Date of publication:
**30.06.2004 Bulletin 2004/27**

(51) Int Cl.⁷: **H04L 1/00**

(21) Application number: **03257726.4**

(22) Date of filing: **09.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.12.2002 JP 2002371426**
**03.03.2003 JP 2003055145**

(71) Applicant: **SONY CORPORATION**
**Tokyo 141 (JP)**

(72) Inventors:
 • **Ishikawa, Masayuki, c/o Intell. Prop.Dpt.**
 **Shinagawa-ku Tokyo 141 (JP)**
 • **Imiya, Daisuke, c/o Intell.Prop.Dpt.**
 **Shinagawa-ku Tokyo 141 (JP)**
 • **Morita, Takao, c/o Intell.Prop.Dpt.**
 **Shinagawa-ku Tokyo 141 (JP)**

(74) Representative: **DeVile, Jonathan Mark, Dr. et al**
**D. Young & Co**
**21 New Fetter Lane**
**London EC4A 1DA (GB)**

Remarks:
A request for correction of figure 4 has been filed pursuant to Rule 88 EPC. A decision on the request will be taken during the proceedings before the Examining Division (Guidelines for Examination in the EPO, A-V, 3.).

(54) **Information processing apparatus, information processing method, data communication system and data communication program**

(57) An information processing apparatus includes a reception unit for receiving predetermined information which includes a transmission state of data transmitted from another information processing apparatus to the information processing apparatus via a network. The information processing apparatus also includes a congestion estimation unit for estimating a congestion state of the network based upon the predetermined information received by the reception unit and a control signal generation unit for generating a control signal for controlling a transmission rate for data from the other information processing apparatus. The control signal is generated based upon whether the congestion state estimated by the congestion estimation unit. A transmission unit transmits the control signal generated by the control signal generation unit to the other information processing apparatus in order to control the data transmission rate.

F I G. 2

EP 1 434 378 A2

**Description**

BACKGROUND OF THE INVENTION

1. Field of the Invention

The present invention relates to an information processing apparatus, an information processing method, a data communication system and a program.

2. Description of Related Art

For example, a method was proposed (see, for example, the following Patent Document 1) as an adaptive rate control method in data transmission and reception which use the real time transfer protocol (RTP) and the RTP control protocol (RTCP). In the method, an apparatus on a transmission side estimates the transmission state of data to control the transmission rate of the data on the basis of the information described in a receiver report (RR) packet of the RTCP by which an apparatus on a data reception side informs the apparatus on the data transmission side of a packet loss rate, a jitter and the like.

Patent Document 1: Japanese Patent Application Laid-Open Publication No. 2002-204278

The method makes it possible to lower a data transmission rate by means of values such as packet loss rates, jitters and the like which are included in RR packets when the packets are lost, or the jitters become large owing to the congestion of a network.
Moreover, a method was proposed (see, for example, the following Patent Document 2). In the method, an apparatus on a data transmission side detects the congestion of a network on the basis of delays of arrivals of packets, and the apparatus controls a data transmission rate on the basis of the detection result.

Patent Document 2: Japanese Patent Application Laid-Open Publication No. Hei 11-308271

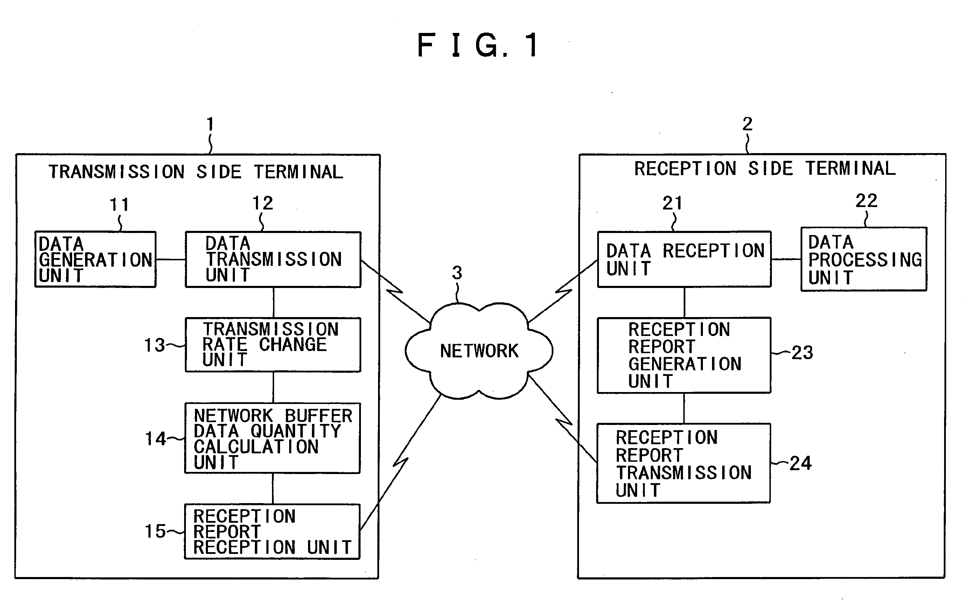

FIG. 1 is a view for illustrating a conventional data communication system. In FIG. 1, data transmitted by a transmission side terminal 1 is received by a reception side terminal 2 through a network 3.
A data generation unit 11 of the transmission side terminal 1 generates data to be transmitted to the reception side terminal 2, and outputs the data to a data transmission unit 12. The data transmission unit 12 divides the supplied data into suitable sizes, and adds the information of a sequence number and a time when the data is to be transmitted to each divided data. Then, the data transmission unit 12 sends the divided data to the reception side terminal 2 through the network 3. At this time, the data transmission unit 12 adjusts the transmission rate of the data by adjusting the size of the division of the data and the intervals of the transmission of the divided data in accordance with the transmission rate specified by a transmission rate change unit 13.
A reception report reception unit 15 receives a reception report transmitted from the reception side terminal 2, and supplies the contents of the report to a network buffer data quantity calculation unit 14. The network buffer data quantity calculation unit 14 calculates a round-trip time of the data on the basis of the contents of the report, and obtains a network buffer data quantity on the basis of the calculated round-trip time. The transmission rate change unit 13 receives the information indicating the network buffer data quantity from the network buffer data quantity calculation unit 14, and determines a transmission rate in order that the network buffer data quantity may be close to a predetermined target network data buffer quantity. Then, the transmission rate change unit 13 specifies the transmission rate to the data transmission unit 12.
On the other hand, a data reception unit 21 in the reception side terminal 2 receives the data to which the sequence number and the transmission time information are added through the network 3, and supplies the received data to a data processing unit 22. The data processing unit 22 executes, for example, the decoding, the display processing and the like of the supplied data.
Moreover, the data reception unit 21 measures the information related to a data reception time, a received data quantity and the like on the basis of the sequence number and the transmission time information which are added to the data, and periodically supplies the measurement results to a reception report generation unit 23. The reception report generation unit 23 calculates a reception rate necessary for the generation of the reception report on the basis of the supplied information, and adds the information of a reception sequence number, a data transmission time, a data reception time and a reception report transmission time to the calculated reception rate to output the reception rate including the information to a reception report transmission unit 24. The reception report transmission unit 24 transmits the supplied reception report to a reception report reception unit 14 of the transmission side terminal 1 through the network 3.

When data transfer and reception by the transmission side terminal 1 and the reception side terminal 2 of FIG. 1 are performed by means of the RTP, the transmission side terminal 1, which has received an RTCP receiver report packet, i.e. an RR packet, measures a round trip time (RTT) of the RTCP to measure the delay of data transfer. The method can be realized only by means of a reference frame of the RTCP, and consequently the method has an advantage that the RTT can be measured even if the internal time of the transmission side terminal 1 and the internal time of the reception side terminal 2 are different from each other.

In the transmission side terminal 1 and the reception side terminal 2 of FIG. 1, a target network buffer data quantity is previously set, and a network buffer data quantity is obtained by the transmission side terminal 1 on the basis of a reception bit rate included in a reception rate and an RTT. Thereby, rate control is performed.

Moreover, a method for finding out the optimum rate by varying the rate of a transmission side up and down was proposed (see, for example, Patent Document 3).

Patent Document 3: Japanese Patent Application Laid-Open Publication No. Hei 11-341064

The method, basically similarly to the case shown in Patent Document 2, controls the transmission rate by detecting the transmission delay (the delay to an RTT) of a packet on the transmission side transmission side on the basis of information from a reception side terminal by means of the sender report (SR) packets and the RR packets of the RTCP.

Moreover, there is a technique capable of controlling data transmission rates by estimating the transmission bandwidth of a network on a data reception side to transmit a transmission control instruction from the data reception side to a data transmission side on the basis of the estimated transmission bandwidth (see, for example, Patent Document 4).

Patent Document 4: Japanese Patent Application Laid-Open Publication No. 2000-115245

According to the method, the transmission bandwidth can be obtained by transmitting, for example, a test packet.

However, it is generally difficult to presume the congestion state of a network by means of values such as a packet loss rate, a jitter and the like which are included in an RR packet.

Moreover, in a case of performing rate control by setting a target network data buffer quantity previously, and by obtaining a network buffer data quantity on a transmission side on the basis of a reception bit rate included in a reception rate and an RTT in order that the network buffer data quantity may coincide with the target network buffer data quantity, it is difficult to determine the optimum target network buffer data quantity previously in the state in which a network topology and the kind of a router are not specified.

Moreover, because it is necessary for measuring an RTT to utilize SR packets and RR packets of the RTCP, the RTT is measured as a value including congestion in a data transmission path from a reception side to a transmission side when the congestion occurs in the data transmission path from the reception side to the transmission side. Moreover, because the transmission interval of the RTCP depends on implementation (it is recommend that the interval is five seconds or more), it is difficult especially in the status in which the status of a network changes momentarily as in a wireless line to control a transmission rate by measuring the RTT periodically.

Moreover, even if the transmission and the reception of the SR packets and the RR packets are implemented, the transmission rate setting method on the transmission side depends on algorithm implemented on the transmission side, the congestion is not always avoided on the basis of the contents of the RR packets informed from the reception side.

Moreover, it is necessary to use packet data of at least two packet sizes for obtaining the transmission bandwidth of a network, i.e. the speed of a bottle neck link in the case where the transmission bandwidth of the network is estimated on the data reception side and transmission control instruction is performed on the data reception side on the basis of the estimation. Consequently, the method cannot be applied to the transmission and the reception of the data executed by being packetized at a fixed length as in a case where, for example, Moving Picture Experts Group 2 over Internet Protocol Transfer System (MPEG2-TS) is packetized to be an RTP packet in accordance with Request For Comment (RFC) 2250 to be transmitted.

Moreover, because the transmission bandwidth of a network estimated on the data reception side is the bandwidth of the so-called bottle neck link, a data transmission path is controlled on the basis of the bandwidth of the bottle neck link, even if an actually utilizable bandwidth is narrower than the bandwidth of the bottle neck link due to, for example, cross traffic or the like. Consequently, there is the possibility that data is transmitted at a data transmission rate which is not based on an actual network status.

SUMMARY OF THE INVENTION

Various aspects and features of the present invention are defined in the appended claims.

The present invention was made in view of such status, and makes it possible to control a data transmission rate according to the situation of a network even if a network topology or the kind of a router cannot be specified, or if a bandwidth utilizable in a network changes owing to cross traffic or the like.

Embodiments of the present invention can provide an information processing apparatus, an information processing method, a data communication system and a program which can transmit data at an optimum data transmission rate according to the status of a network.

A first information processing apparatus of the present invention comprises: first reception means for receiving predetermined information including a transmission state of data transmitted from another information processing apparatus; congestion estimation means for estimating congestion of a network on a basis of the predetermined information received by the first reception means; control signal generation means for generating a first control signal for controlling a data transmission rate of the another information processing apparatus on a basis of whether the congestion is estimated or not by the congestion estimation means; and first transmission means for transmitting the first control signal generated by the control signal generation means to the another information processing apparatus.

It is possible that the congestion estimation means includes delay detection means for detecting a delay of data transmission in the network on a basis of the predetermined information received by the first reception means, and that the control signal generation means generates the first control signal for controlling the data transmission rate of the another information processing apparatus on a basis of the delay of the data transmission detected by the delay detection means.

In a case where a clock for data transmission processing in the another information processing apparatus described in the predetermined information and a clock used for data reception processing in the delay detection means coincide, the delay detection means can detect delay in data transmission using these clocks being used as a first reference clock. In a case where the clock for data transmission processing in the another information processing apparatus is different from the clock of the delay detection means, the delay detection means can detect delay in data transmission using a second reference clock different from the first reference clock.

It is possible that the data is an RTP packet based on RFC 1889, and that the first reference clock is NTP, and that the second reference clock is a clock different from the first reference clock equipped in the delay detection means itself.

It is possible that the information processing apparatus further comprises reception time measurement means for measuring time when the predetermined information is received by the first reception means, and that the delay detection means detects a relative delay of the data transmission on a basis of a plurality of pieces of reception time of the predetermined information measured by the reception time measurement means when the clock for the transmission processing of the data in the another information processing apparatus, the transmission processing described in the predetermined information, is different from the clock for the data reception processing, the clock equipped in the delay detection means, and when mapping functions of the second reference clock and the first reference clock cannot be calculated.

It is possible that the data is composed of a packet in a predetermined size, and that the predetermined information includes information of a reception number of the packet and a number of packet losses.

It is possible that the congestion estimation means further includes packet loss rate detection means for detecting a packet loss rate of the packet transmitted from the another information processing apparatus on a basis of the predetermined information receive by the first reception means, and that the control signal generation means generates the first control signal for controlling the data transmission rate of the another information processing apparatus on a basis of the packet loss rate detected by the packet loss rate detection means in addition to the delay of the data transmission detected by the delay detection means.

It is possible that the control signal generation means generates the first control signal for controlling the data transmission rate of the another information processing apparatus so as to lower when the delay detection means detects an increase of the delay of the data transmission equal to or more than a first predetermined quantity, or when the packet loss rate detection means detect the packet loss rate equal to or more than a second predetermined quantity.

It is possible that the control signal generation means generates the first control signal for controlling the data transmission rate of the another information processing apparatus so as to rise when the delay detection means does not detect an increase of the delay of the data transmission equal to or more than a first predetermined quantity for a predetermined time, and when the packet loss rate detection means does not detect the packet loss rate equal to or more than a second predetermined quantity for the predetermined time.

It is possible that the congestion estimation means includes a first congestion condition detection means for detecting a first condition for estimating the congestion of the network referring to a first time as a reference on a basis of the predetermined information, and second congestion condition detection means for detecting a second condition for estimating the congestion of the network referring a second time as a reference on a basis of the predetermined information.

It is possible that the control signal generation means generates the first control signal for controlling the data transmission rate of the another information processing apparatus so as to lower when the first congestion condition detection means and the second congestion condition detection means detect at least one of the first condition and the second condition.

It is possible that the control signal generation means generates the first control signal for controlling the data transmission rate of the another information processing apparatus so as to rise when the first congestion condition detection means and the second congestion condition detection means do not detect the first condition and the second condition for a predetermined time.

It is possible that the information processing apparatus further comprises: second transmission means for transmitting the data to the another information processing apparatus; second reception means for receiving a second control signal for controlling the data transmission rate by the second transmission means from the another information processing apparatus; and control means for controlling the data transmission rate transmitted from the second transmission means on a basis of the second control signal received by the second reception means.

As described above, according to the present invention, data can be received. In particular, it is possible to generate a control signal of a data transmission rate according to the status of a network, and to transmit the generated control signal to the apparatus on the transmission side.

Moreover, according to anther aspect of the present invention, besides the capability of the transmission of data, a data transmission rate can be controlled on the basis of the control signal of the data transmission rate received form an apparatus on a data reception side.

Moreover, according to a further aspect of the present invention, in addition to the capability of transmission and reception of data by two apparatus, the following can be performed. That is, an apparatus on a data reception side can generate a control signal of a data transmission rate according to the status of a network, and can transmit the generated control signal to an apparatus on a transmission side. The apparatus on the data transmission side can control the data transmission rate on the basis of the control signal of the data transmission rate.

BRIEF DESCRIPTION OF THE DRAWINGS

The invention will now be described by way of example with reference to the accompanying drawings, throughout which like parts are referred to by like references, and in which:

FIG. 1 is a view for illustrating a conventional data communication system;

FIG. 2 is a block diagram showing the configurations of a data transmission apparatus and a data reception apparatus of a data communication system to which the present invention is applied;

FIG. 3 is a view illustrating an SR packet;

FIG. 4 is a view illustrating an RR packet;

FIG. 5 is a view illustrating an application defined RTCP packet (APP);

FIG. 6 is a block diagram showing the configuration of a congestion prediction unit in FIG. 2;

FIG. 7 is a diagram illustrating simple decrease of delay due to reception time;

FIG. 8 is a diagram illustrating state transitions;

FIG. 9 is a diagram illustrating state transitions and data transmission rates;

FIG. 10 is a flowchart illustrating statistical information generation processing;

FIG. 11 is a flowchart illustrating rate control processing;

FIG. 12 is a flowchart illustrating transmission rate change processing;

FIG. 13 is a block diagram showing the configuration of data transmission and reception apparatus in another example of the data communication system to which the present invention is applied; and

FIG. 14 is a block diagram showing the configuration of a personal computer.

DETAILED DESCRIPTION OF THE PREFERRED EMBODIMENTS

In the following, the preferred embodiment of the present invention will be described by reference to the attached drawings.

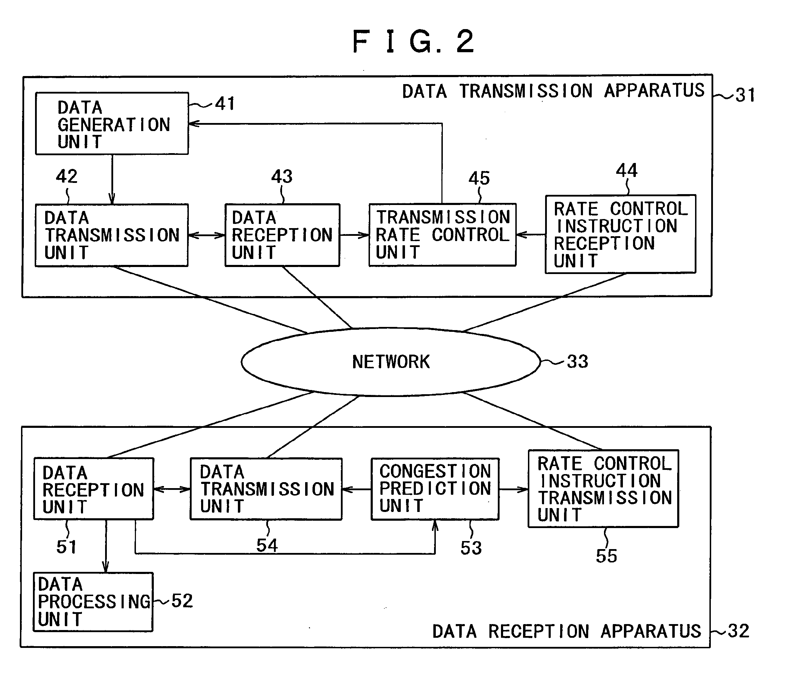

FIG. 2 is a block diagram showing the configurations of a data transmission apparatus 31 and a data reception apparatus 32 in a data communication system to which the present invention is applied.

The data transmission apparatus 31 and the data reception apparatus 32 perform the transfers of data in accordance with the RTP which is a real-time data transfer protocol. The RTP is designed with a purpose of transferring video data and audio data in a form suitable for a real-time transmission on the supposition that the video data and the audio data is used by, for example, an application program for performing a teleconference, and the like. In the RTP, data is divided into packets per time to be transmitted. Moreover, the RTP is a user datagram protocol (UDP) type protocol in which a packet loss measure, the assurance of transmission time, and the like are not performed. The RTP is ordinarily used as a set together with a communication state report in accordance with the RTCP.

Moreover, the network 33 may be, for example, a local area network (LAN) managed within an organization, a large scale network to which many unspecified networks are connected such as the Internet, or a dedicated line for connecting a predetermined transmission apparatus to a predetermined reception apparatus.

A data generation unit 41 of the data transmission apparatus 31 generates, for example, audio data, image data, video data, text data, or mixed data of these pieces of data, and supplies the generated data to a data transmission unit 42. The data quantity generated at this time is controlled by a transmission rate control unit 45.

When the data transmission unit 42 transmits the data supplied from the data generation unit 41 as RTP packets, the data transmission unit 42 adds a Sender Report (SR) packet by the RTCP to the data at every predetermined time, for example, every five seconds, and transmits the added data to the data reception apparatus 32 through the network 33. The SR packet is a report for a transmission and reception statistic on the data transmission side. In the SR packet, the information indicating a data transmission state is described.

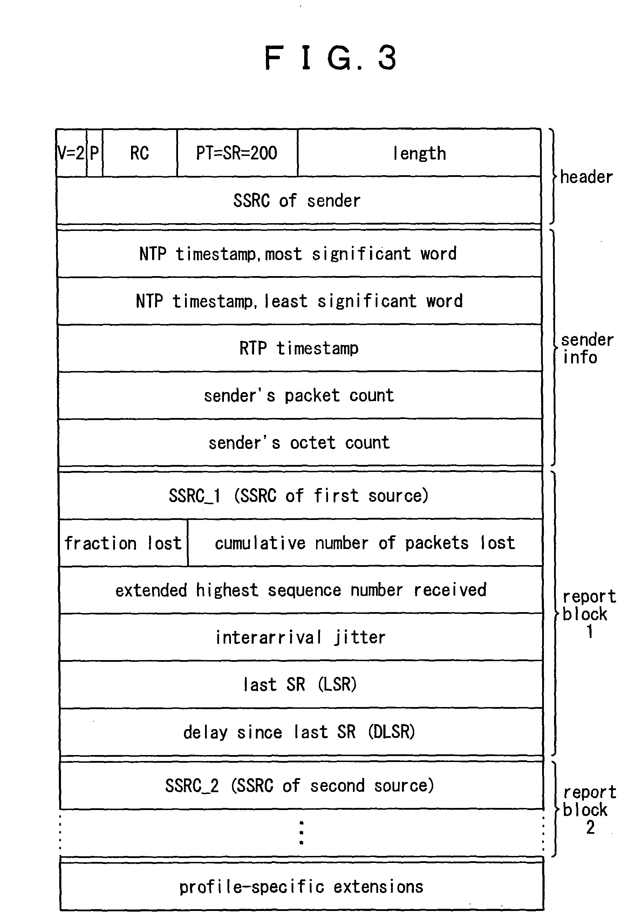

FIG. 3 shows a format of an SR packet.

A header is composed of version information (V) being 2-bit information for identifying the version of the RTP, a 1-bit padding bit (P) being the information indicating whether the packet includes one or more padding octets or not, a 5-bit reception report count (RC) indicating the number of reception report blocks included in the packet, an 8-bit packet type (PT) describing a constant 200 indicating an SR packet for discriminating between the SR packet and an RR packet, a packet length being 16-bit information indicating the length of the RTCP packet, and a sender SSRC identifier (SSRC of sender).

Then, sender information (Sender Info) is composed of a 64-bit network time protocol time stamp (NTP time stamp), a 32-bit real-time transport protocol time stamp (RTP time stamp), 32-bit sending packet number information (sender's packet count), and 32-bit sending data quantity information (sender's octet count).

A report block is composed of a 32-bit SSRC identifier number (SSRC_n (source identifier)), fraction lost indicating a packet loss rate, a cumulative number of packets lost, the maximum value of sequence numbers (extended highest sequence number received), inter-arrival jitter indicating change of the arrival time interval of RTP packets, last SR (LSR) being the information of a time stamp of the latest SR packet receiving time, and a delay since last SR (DLSR) indicating a delay from the LSR.

Moreover, an SR packet is further provided with a special extended area (profile-specific extensions).

As described above, an SR packet includes an NTP time stamp, and an RTP time stamp.

A data reception unit 43 receives an RR packet of the RTCP transmitted from the data reception apparatus 32. The RR packet is a report for a reception statistic from the data transmission side.

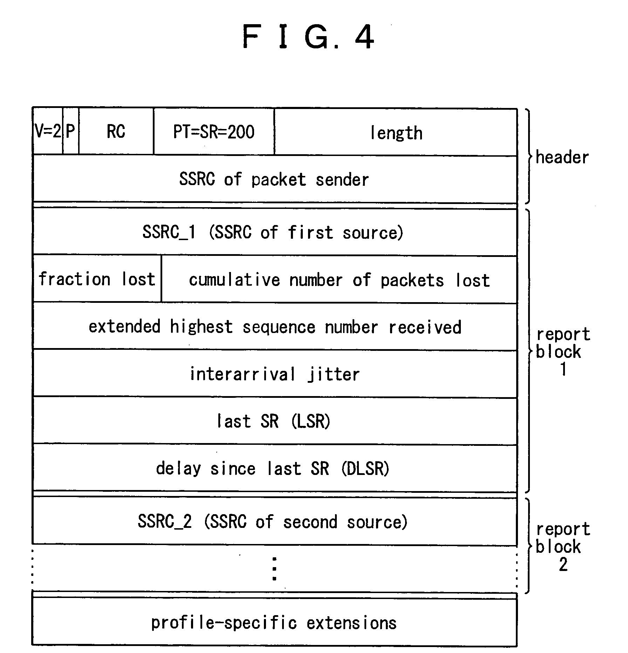

FIG. 4 shows the format of an RR packet.

The format of the RR packet has the same header structure as that of the SR packet except that a constant 201 indicating the RR packet is described in the packet type (PT), and that a sender SSRC identifier (SSRC of packet sender) of a received RTP packet in place of the sender SSRC identifier (SSRC of sender). The format of the RR packet does not include the sender information included in the SR packet, but includes a report block and a special expanded area similar to those of the SR packet.

A rate control instruction reception unit 44 receives a rate control instruction from the data reception apparatus 32 through the network 33, and supplies the received rate control instruction to the transmission rate control unit 45.

The transmission rate control unit 45 generates a transmission rate control signal on the basis of the rate control instruction supplied from the rate control instruction reception unit 44, and supplies the generated transmission rate control signal to the data generation unit 41.

A data reception unit 51 of the data reception apparatus 32 receives an SR packet and an RTP packet from the data transmission apparatus 31 through the network 33, and supplies, for example, the data of video, audio, text and the like of the RTP packet to a data processing unit 52. Moreover, the data reception unit 51 supplies the information necessary for estimating congestion such as a reception time of the RTP packet, a time stamp, a packet size, a sequence number and the like to a congestion prediction unit 53.

The data processing unit 52 executes the processing of the data supplied from the data reception unit 51. To put it concretely, to the supplied data, the data processing unit 52 executes, for example, decoding processing, descramble processing, display processing, audio reproduction processing, and the like.

A data transmission unit 54 generates an RR packet, which has been described by reference to FIG. 4, to the RTP packet transmitted form the data transmission apparatus 31, and transmits the generated RR packet to the data transmission apparatus 31 through the network 33.

The congestion prediction unit 53 estimates the congestion of a data transmission path on the basis of the information supplied from the data reception unit 51, and sets a data reception rate (i.e. the data transmission rate of the data received by the data reception apparatus 32) on the basis of the estimation as the need arises. Then, the congestion prediction unit 53 generates a rate control instruction to supply the generated rate control instruction to a rate control instruction transmission unit 55.

The rate control instruction transmission unit 55 transmits the rate control instruction supplied from the congestion prediction unit 53 to the data transmission apparatus 31 as an application defined RTCP packet (APP of the RTCP) through the network 33. The APP is a packet for extension of application.

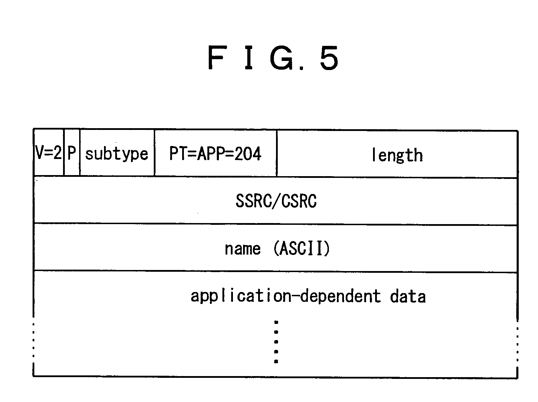

FIG. 5 shows the format of an APP.

The APP is composed of a version information (V) being 2-bit information for identifying the version of the RTP, a 1-bit padding bit (P) being information indicating whether the packet includes one or more padding octets or not, a subtype for identifying definition of the packet, an 8-bit packet type (PT) describing a constant 204 indicating that the packet is an APP, a packet length being 16-bit information indicating the length of the RTCP packet, an SSRC identifier or a contributing source (CSRC) identifier being a transmitter concerned (an original sender ID in case of being mixed by a mixer), a name added to the APP peculiarly, which is described by means of the American National Standard Code for Information Interchange (ASCII) code, and the information depending on an application (application dependent data).

Although the case where the transmission and the reception of data are executed in a plurality of blocks is described in the data transmission apparatus 31 and the data reception apparatus 32 in FIG. 2, the data transmission apparatus 31 may be configured to be able to execute the processing executed by the data transmission unit 42, the data reception unit 43, and the rate control instruction reception unit 44 by one or two transmission and reception functions. Otherwise, the data reception apparatus 32 may be configured to be able to execute the processing executed by the data reception unit 51, the data transmission unit 54, and the rate control instruction transmission unit 55 by one or two transmission and reception functions.

Next, the operation of the data transmission apparatus 31 and the data reception apparatus 32 will be described.

The data generation unit 41 of the data transmission apparatus 31 receives the operation input of a user from a not shown operation input unit, and generates, for example, audio, image, video and text data, or the mixed data of them to supply the generated data to the data transmission unit 42. The quantity of the data generated at this time is controlled by the transmission rate control unit 45.

The data transmission unit 42 divides the data supplied from the data generation unit 41 into packets at every unit time, and adds an SR packet to each of the divided packets at every predetermined time to transmit the divided packets including the SR packet to the data reception apparatus 32 through the network 33.

The data reception unit 51 of the data reception apparatus 32 receives RTP packets and RTCP SR packets from the data transmission apparatus 31 through the network 33. The data reception unit 51 supplies the data of, for example, video, audio, text and the like to the data processing unit 52, and supplies the reception time, the time stamps, the sequence numbers of the RTP packets, the time information included in the SR packets, and the like to the congestion prediction unit 53.

Moreover, when a packet loss such as the destruction of a frame owing to a bit error of an access line, the destruction of a packet in a bottle neck link or the like occurs in a received packet, the data reception unit 51 supplies the information related to the packet loss to the congestion prediction unit 53.

The congestion prediction unit 53 obtains a delay of data and a packet loss rate on the basis of the information supplied form the data reception unit 51, and generates a rate control instruction as the need arises.

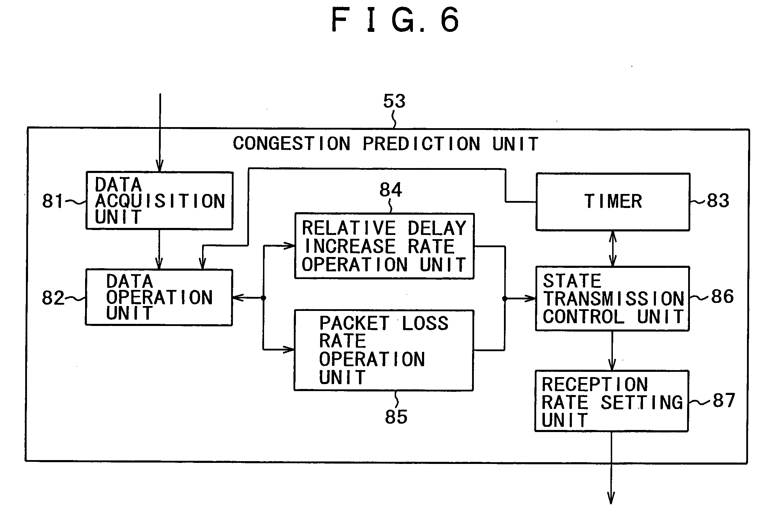

FIG. 6 shows a functional block diagram of the congestion prediction unit 53.

A data acquisition unit 81 acquires time information included in an SR packet, and the information necessary for acquiring the delay and the packet loss rate of the data of the reception time, the time stamp, the packet size, the sequence number and the like of an RTP packet from the data reception unit 51, and supplies the acquired data to a data operation unit 82.

The data operation unit 82 operates a one-way delay, a number of packet losses, a number of received packets, and the total sum of the byte count of received data in the data transmission from the data transmission apparatus 31 to the data reception apparatus 32 at a predetermined period of time such as for five seconds or for ten seconds by reference to the time information supplied from a timer 83, and generates statistical information.

When the time of the data transmission apparatus 31 and the time of the data reception apparatus 32 by the NTP coincide with each other, it is possible to obtain absolute delay time at the time accuracy of the NTP by performing the mapping from the time stamps of the RTP included in the SR packets of the RTCP to the NTP. However, actually, there are many environments in which the NTP cannot be used.

Next, the measurement method of a delay in the case where the NTP cannot be used, namely, in the case where the time by the NTP in the data transmission apparatus 31 and the time by the NTP in the data reception apparatus 32 do not coincide with each other, will be described.

First, the absolute delay of each packet can be obtained by the following formula (1).

$$\text{Delay of RTP Packet} = \text{Arrival Time [NTP] of RTP}$$

$$\text{Packet - Transmission Time [NTP] of RTP Packet} \tag{1}$$

Hereupon, the content of brackets [ ] indicates the clock by which the time is referred to (it is similar in the following).

When the time by the NTP of the data transmission apparatus 31 and the time by the NTP of the data reception apparatus 32 are synchronized with each other and NTP information is correctly included in the SR packets of the RTCP, the next formula (2) is satisfied.

$$\text{Delay of RTP Packet} = \text{Arrival Time [NTP] of RTP}$$

$$\text{Packet - RTP Time Stamp} \tag{2}$$

Then, a mapping function f1 from the NTP to the RTP time stamps which correlates the transmission time of the RTP packets with the time stamps in the SR packets by means of the time stamps and the mapping information of the NTP is obtained as shown by a formula (3). Then, the delays of the RTP packets can be obtained in accordance with a formula (4) by replacing the RTP time stamps in the formula (2) with the mapped time stamps.

$$\text{RTP Time Stamp} = \text{f1 [NTP]} \tag{3}$$

$$\text{Delay of RTP Packet} = \text{Arrival Time [NTP] of RTP}$$

$$\text{Packet - f1 [NTP]} \tag{4}$$

On the other hand, when the mapping from the time stamps of the RTP to the NTP cannot be performed and then the formula (3) cannot be obtained because, for example, the NTP of the SR packets is apparently shifted, or the SR packets cannot be received, it is necessary to measure the delays with the clock in the data reception apparatus 32. In this case, the delays of the RTP packets can be actually obtained by measuring relative delays to the arrival time of a certain RTP packet set as a base point.

For example, the time stamp of a first RTP packet is supposed to be TS1, and the reception time (by the unit of ms) of the first RTP packet is supposed to be TR1.
The time stamp of the first RTP packet and the reception time of the first RTP packet are time to be measured on a reference different from that of the NTP. Hereupon, for synchronizing the unit of time of the time stamp of the first RTP packet with the reception time of the first RTP packet, the reception time is multiplied by the reference clock of the RTP. In data communication by the RTP Payload format for MPEG-4 Elementary Stream (RFC3016), the clock of 90 KHz is used as the reference clock. Accordingly, when the unit of the reception time is ms, the next formula (5) may be used for converting the reception time to the reference clock of the time stamp.

$$\text{Reception Time [Reference Clock]} =$$

$$\text{TR1 (ms)} \times 90 \tag{5}$$

Now, the first RTP packet to the n-th RTP packet are respectively supposed to be RTP1 to RTPn, and respective time stamps are supposed to be TS1 to TSn. Then, if there is no congestion or packet loss in the network, the next formula (6) becomes almost a constant.

$$\text{(Time Difference between Terminals + Delay of Packet)}$$

$$\text{[Reference Clock]} = \text{TSn} - (\text{TRn} \times 90) \tag{6}$$

The TSn - (TRn $\times$ 90) indicated by the formula (6) is the time difference between the data transmission apparatus 31 and the data reception apparatus 32 in a case of the measurement by the reference clock of the RTP by means of the internal clock of the data reception apparatus 32. Incidentally, jitters and the disagreements of clocks between transmission and reception are neglected in the formula (6).

However, it is not known how long the time difference corresponds to the time difference in absolute time. That is, even if the value of the formula (6) is zero, the length of the delay of the packet cannot be obtained. Consequently, the data operation unit 82 sets the time difference including the delay of the packet between the data transmission apparatus 31 and the data reception apparatus 32 at a certain time as an initial time difference between terminals, and measures relative delays by a formula (7) on the basis of the initial time difference.

$$\text{Relative Delay of RTP Packet [reference clock]} = (TR \times 90 - TS) - \text{Initial Time Difference between Terminals} \qquad (7)$$

It is noted that, TR is the reception time (by the unit of ms) of the RTP packet, and TS is the time stamp of the RTP.

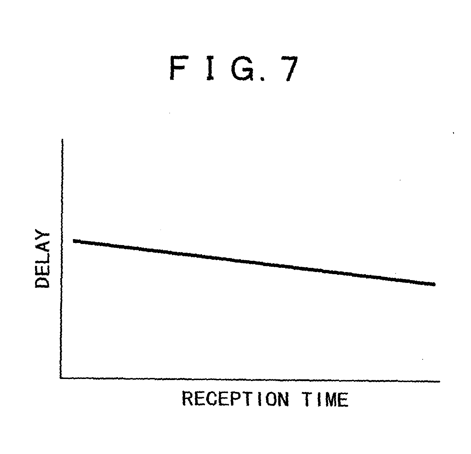

Now, as described above, in the formula (6), the jitters and the disagreement of the clocks between the transmission and the reception are neglected, and the difference of the time stamps between transmission and reception obtained from the formula (6) is supposed to be constant. However, actually, the sum of the time difference between the terminals expressed by the formula (6) and the delay of a packet shows a tendency of either gradual monotone decreasing or gradual monotone increasing owing to the disagreement between the basic clocks of the data transmission apparatus 31 and the data reception apparatus 32. For example, as shown in FIG. 7, a status of delays decreasing gradually as the reception time elapses occurs.

In such a case, when an initial time difference calculated by means of the formula (7) is continued to be used as the initial value, obtained relative delays also monotonously decrease or monotonously increase. Accordingly, it is necessary to update the initial time difference calculated by means of the formula (7) periodically.

Moreover, because the data operation unit 82 receives the supply of the number of packet losses, the number of received packets, and received data quantity (receive byte count), the data operation unit 82 referrers to the timer 83 to obtain the total sum of the relative delays of the RTP packets, the number of packet losses, the number of received packets, and the total sum of the received data quantity (received byte count) at every predetermined time such as five seconds or ten seconds.

Next, a relative delay increase rate operation unit 84 operates the average relative delay of the RTP packets during a predetermined time (a period from time t1 to time t2) by means of the next formula (8) on the basis of the total sum of the relative delays of the number of received packets and the RTP packets, which total sum has been supplied from the data operation unit 82.

$$\text{Average Relative Delay } (t1, t2) \text{ of RTP Packet} = (\sum_{t1}^{t2}(\text{Relative Delay of RTP Packet}))/(\text{Number of Packets}) \quad ...(8)$$

Moreover, the relative delay increase rate operation unit 84 compares the average relative delay of an RTP packet which has been calculated by the use of the formula (8) with the average relative delay in the preceding section to calculate an average relative delay increasing rate D.

Then, a packet loss rate operation unit 85 obtains a packet loss rate L on the basis of the information supplied from the data operation unit 82.

A packet loss of an RTP packet generally occurs by the destruction of a frame due to a bit error of an access line, or by the destruction of a packet in a bottle neck link. The bit error of the access line can be prevented to some degree by an error correction, retransmission in a link layer (especially in a case of a wireless link), and the like. However, a certain measure of packet losses occur according to a condition of radio waves in an actual wireless link. Moreover, when the destruction of a packet occurs at a bottle neck link, the queue of the bottle neck link overflows to generate a packet loss. Consequently, in the status in which, for example, a first in first out (FIFO) type queue is used, the packet loss corresponding to the quantity of the overflow occurs.

That is, because the packet loss due to a bit error on an access line is estimated to occur at a certain measure of probability, a packet loss rate does not always lower by lowering the rate on the transmission side. However, when the destruction of a packet at a bottle neck link occurs, the packet loss continues to occur unless the rate on the transmission side is lowered.

Hereupon, the packet loss rate operation unit 85 operates a packet loss rate in accordance with the following formula (9).

$$\text{Packet Loss Rate L = Number of Packet Losses/(Number}$$

$$\text{of Received Packets + Number of Packet Losses)} \qquad (9)$$

A state transition control unit 86 judges whether to make the control state of the reception rate transit or not on the basis of the average relative delay increase rate of RTP packets and packet loss rates which have been supplied from the relative delay increase rate operation unit 84 and the packet loss rate operation unit 85, respectively.

The state transition control unit 86 periodically compares the average relative delay increase rates with a predetermined threshold value H1 in accordance with a formula (10). When an average relative delay increase rate is larger than the threshold value H1, the state transition control unit 86 makes the control state transit to lower the reception rate.

$$\text{Average Relative delay Increase Rate D > Threshold}$$

$$\text{Value H1} \qquad (10)$$

Moreover, the state transition control unit 86 periodically compares packet loss rates within a predetermined short time (within a sufficiently shorter time, for example, a range from several 100 msec to 1 sec, than the period of time in a case of obtaining an average relative delay increase rate) with a predetermined threshold value H2 in accordance with a formula (11). When a packet loss rate is larger than the threshold value H2, the state transition control unit 86 makes the control state transit to lower the reception rate.

$$\text{Packet Loss Rate L > Threshold Value H2} \qquad (11)$$

When the transmission bandwidth of the data transmission path between the data transmission apparatus 31 and the data reception apparatus 32 has a certain degree of largeness, the length of a queue in the network becomes relatively short. Consequently, when the state of the data transmission path becomes unstable, the packet loss rate easily increases. Hence, the formula (11) is more easily satisfied than the formula (10). On the contrary, when the transmission bandwidth of the data transmission path between the data transmission apparatus 31 and the data reception apparatus 32 is relatively small, the length of a queue in the network becomes relatively long. Consequently, when the state of the data transmission path becomes unstable, the average relative delay increase rate D becomes easily increases. Hence, the formula (10) is more easily satisfied than the formula (11).

In such a method, it is judged whether the reception rate should be lowered or not on the basis of the two evaluation formulae of the formula (10) and the formula (11). Thereby, whichever the data transmission bandwidth is large or small, it becomes possible to control the data reception rate to be most suitable for the state of the data transmission path.

Moreover, there is a case where the state transition control unit 86 makes the state transition for keeping the reception rate to be constant, or for raising the reception rate on the basis of a comparison result by the formula (10) and formula (11) when the data transmission state is stable.

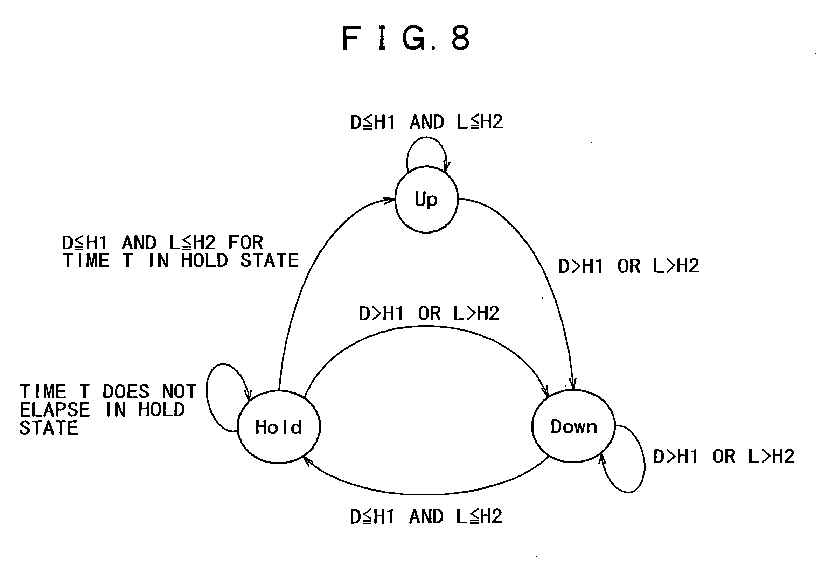

A state transition diagram by the state transition control unit 86 is shown in FIG. 8.

There are three states, that is, an up state for the control of raising the data reception rate, a down state for the control of lowering the data reception rate, and a hold state for the control of holding the data reception rate without changing it.

At the start of control, the state is the hold state. When the state transition control unit 86 judges that the average relative delay increase rate D ≤ the threshold value H1 and the packet loss rate L ≤ the threshold value H2 on the basis of a comparison result by the formula (10) and the formula (11) while keeping the hold state for a fixed time T, the state transition control unit 86 makes the state transition to the up state. When the state transition control unit 86 judges that the average relative delay increase rate D > the threshold value H1, or that the packet loss rate L

> the threshold value H2, the state transition control unit 86 makes the state transition to the down state.

In the up state, when the state transition control unit 86 judges that the average relative delay increase rate D ≤ the threshold value H1 and the packet loss rate L ≤ the threshold value H2 on the basis of a comparison result by the formula (10) and the formula (11), the state transition control unit 86 keeps the state in the up state. When the state transition control unit 86 judges that the average relative delay increase rate D > the threshold value H1, or that the packet loss rate L > the threshold value H2, the state transition control unit 86 makes the state transition to the down state.

Moreover, when the state transition control unit 86 judges that the average relative delay increase rate D ≤ the threshold value H1 and the packet loss rate L ≤ the threshold value H2 on the basis of the comparison result by the formula (10) and the formula (11) in the down state, the state transition control unit 86 makes the state transition to the hold state. When the state transition control unit 86 judges that the average relative delay increase rate D > the threshold value H1, or that the packet loss rate L > the threshold value H2, the state transition control unit 86 holds the state in the down state.

The state transition control unit 86 outputs a state transition signal indicating the present state to a reception rate setting unit 87.

The reception rate setting unit 87 sets a reception rate on the basis of the state transition signal supplied from the state transition control unit 86, and generates a rate control instruction.

When the state is the down state, the reception rate setting unit 87 calculates a re-set rate R in accordance with the following formula (12).

$$\text{Re-Set Rate } R = \text{Reception Rate} \times C1 \tag{12}$$

Hereupon, C1 in the formula (12) indicates a predetermined constant of one or less, or a value of one or less obtained by operating a reciprocal of an average relative delay increase rate separately.

Then, when the state is the up state, the reception rate setting unit 87 calculates the re-set rate R by the following formula (13).

$$\text{Re-Set Rate } R = \text{Reception Rate} \times C2 \tag{13}$$

Incidentally, C2 is a predetermined constant of one or more, or a value of one or more calculated by obtaining the reciprocal of the packet loss rate L.

Incidentally, as for the upper limit of the reception rate, the link speed of the bottle neck link (the data transmission speed in the network status in which no packet losses or no increases of delays occur) which has been previously measured by the use of the Hypertext Transfer Protocol (HTTP), a packet pair or the like may be set as the upper limit. Otherwise, no upper limit may be set.

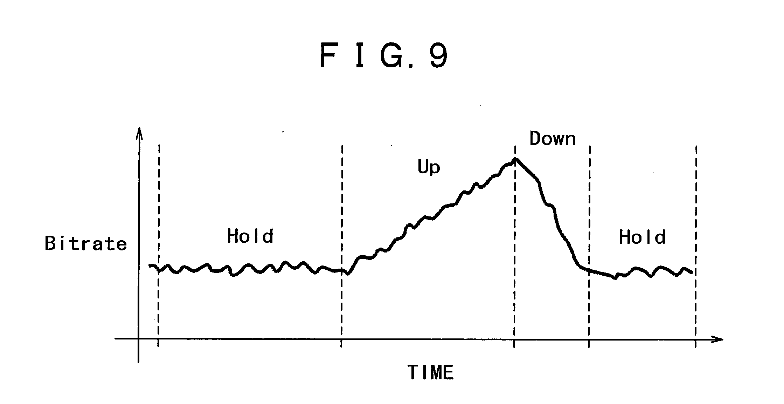

The data reception rate is controlled on the basis of the states shown in the state transition diagram of FIG. 8. Thereby, the data reception rate is controlled in the most suitable state according to the condition of the data transmission path at that time. FIG. 9 is a diagram showing a relation between the states shown in the state transition diagram of FIG. 8 and data reception rates.

There is the case where the state of a data transmission path changes according to time. According to the data reception rate control by the data reception apparatus 32 to which the present invention is applied, the data reception rate is not controlled to converge to a fixed value, but the data reception rate is controlled to increase the data transfer rate by making the state transition to the up state in the state in which the status of the data transmission path is good and no delays or no packet losses occur.

In such a way, the congestion prediction unit 53 generates the rate control instruction as the need arises. The congestion prediction unit 53 outputs the generated rate control instruction to the rate control instruction transmission unit 55.

The rate control instruction transmission unit 55 transmits the rate control instruction to the data transmission apparatus 31 as the APP of the RTCP.

The rate control instruction reception unit 44 of the data transmission apparatus 31 receives the rate control instruction, and supplies the received rate control instruction to the transmission rate control unit 45.

The transmission rate control unit 45 generates a transmission rate control signal on the basis of the rate control instruction supplied from the rate control instruction reception unit 44, and supplies the generated transmission rate control signal to the data generation unit 41.

The data generation unit 41 changes the generation quantity of the data in conformity with the control of the transmission rate control unit 45 as the necessity occurs. Consequently, the data rate of the data transmitted by the data transmission unit 42 is controlled.

In such a way, the data transmission apparatus 31 can transmits packet data at the optimum transmission rate according to the state of a network.

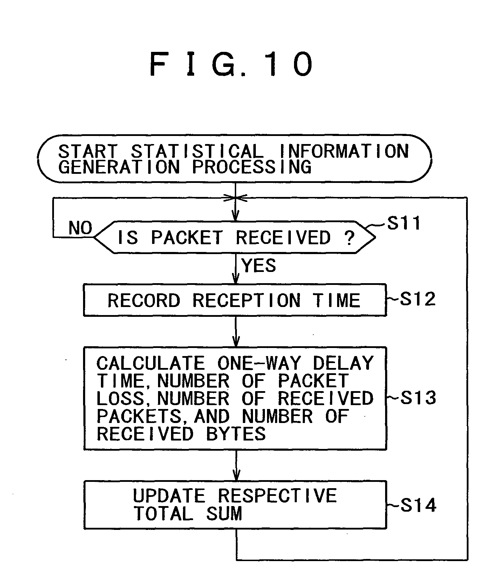

Next, the flowchart of FIG. 10 is referred to while the statistical information generation processing executed by the data reception apparatus 32 is described.

At Step S11, the data reception unit 51 judges whether a packet transmitted from the data transmission apparatus 31 is received through the network 33 or not. When it is judged at Step S11 that the packet is not received, the processing of Step S11 is repeated until that it is judged that the packet is received.

When it is judged at Step S11 that the packet is received, the data reception unit 51 supplies to the congestion prediction unit 53 the information necessary for obtaining delays of data and packet loss rates such as the reception time, the time stamp, the packet size, the sequence number of the received RTP packet, and the NTP information of the received SR packet of the RTCP. At Step S12, the data operation unit 82 of the congestion prediction unit 53 records the reception time of the received RTP packet in an internal memory.

At Step S13, the data operation unit 82 of the congestion prediction unit 53, as described above, calculates the number of packet losses, the number of received packets, and the received byte count for a one-way delay time in data transmission from the data transmission apparatus 31 to the data reception apparatus 32. At Step S14, the data operation unit 82 updates the respective total sums of the one-way delay time, the number of packet losses, the number of received packets, and the received byte count. After the end of the processing at Step S14, the processing returns to Step S11, and the processing after that step is repeated.

By such processing, the data operation unit 82 of the congestion prediction unit 53 generates statistical information.

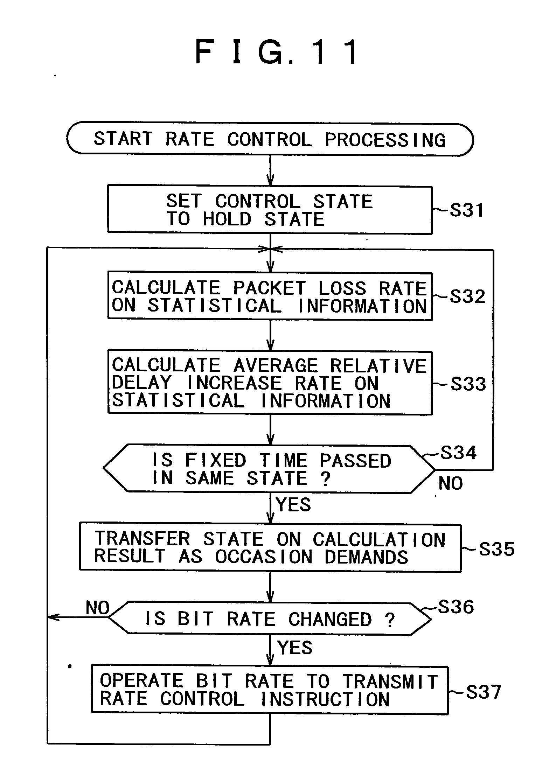

Next, the flowchart of FIG. 11 is referred to while rate control processing to be executed on the basis of the statistical information generated in the statistical information generation processing described with reference to FIG. 10 is described.

At Step S31, the state transition control unit 86 sets the state of control to be the hold state.

At Step S32, the packet loss rate operation unit 85 obtains the number of packet losses and the number of received packets among the pieces of the statistical information from the data operation unit 82, and calculates a packet loss rate L by means of the formula (9).

At Step S33, the relative delay increase rate operation unit 84 obtains the total sum of the relative delays of the RTP packets among the pieces of the statistical information within a predetermined time from the data operation unit 82. Then, the relative delay increase rate operation unit 84 calculates the average relative delay of the RTP packets, and compares the average relative delay of the RTP packets with the average relative delay of the preceding section by means of the formula (8), and calculates the average relative delay increase rate D.

At Step S34, the state transition control unit 86 judges whether a fixed time has passed in the same state or not. When it is judged at Step S34 that the fixed time has not been passed in the same state, the processing returns to Step S32, and the processing after that step is repeated.

When it is judged at Step S34 that the fixed time has passed in the same state, the state transition control unit 86 makes the control state transit at Step S35 as shown in FIG. 8 as the need arises on the basis of the packet loss rate L calculated at Step S32 and the average relative delay increasing rate D calculated at Step S33, and supplies the state transition signal to the reception rate setting unit 87.

At Step S36, the reception rate setting unit 87 judges whether the reception rate setting unit 87 should change the reception bit rate or not on the basis of the state transition signal supplied form the state transition control unit 86. When it is judged that the state transition signal indicates the hold state and the reception bit rate is not changed at Step S36, the processing returns to Step S32, and the processing after the step is repeated.

When it is judged that the state transition signal indicates the up state or the down state and the reception bit rate is changed at Step S36, the reception rate setting unit 87 at Step S37 operates the bit rate by the use of the above-mentioned formula (12) or the formula (13), and generates a rate control instruction to supply the generated rate control instruction to the rate control instruction transmission unit 55. The rate control instruction transmission unit 55 transmits the rate control instruction to the data transmission apparatus 31 through the network 33.

After the completion of the processing at Step S37, the processing returns to Step S32, and the processing subsequent to the step is repeated.

By such processing, the data reception apparatus 32 generates the rate control instruction according to the state of the data transmission path (the network 33), and transmits the generated rate control instruction to the data transmission apparatus 31.

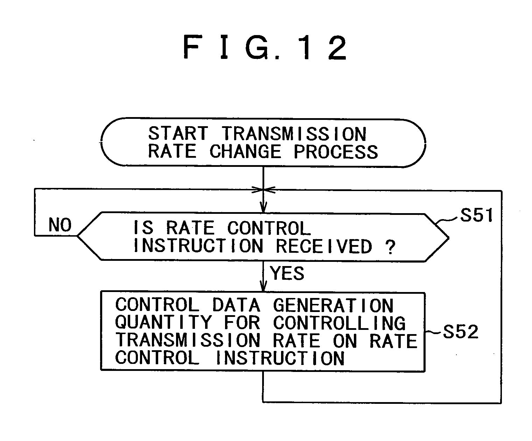

Next, the flowchart of FIG. 12 is referred to, the transmission rate change processing executed by the data transmission apparatus 31 is described.

At Step S51, the rate control instruction reception unit 44 of the data transmission apparatus 31 judges whether the rate control instruction has been received or not. When it is judged at Step S51 that no rate control instructions are received, the processing at Step S51 is repeated until it is judged that the rate control instruction is received.

When it is judged at Step S51 that a rate control instruction is received, the rate control instruction reception unit 44 supplies the received rate control instruction to the transmission rate control unit 45. Consequently, at Step S52, the transmission rate control unit 45 controls the data quantity of the data generated by the data generation unit 41 on the basis of the rate control instruction for controlling the transmission rate. By the control of the data quantity of the data to be generated, the transmission rate is finally controlled.

After the end of the processing at Step S52, the processing returns to Step S51, and the processing after the step is repeated.

By such processing, the data transmission apparatus 31 transmits data to the data reception apparatus 32 at the transmission rate based on the received rate control instruction.

In the above, the system composed of the data transmission apparatus 31 for transmitting packet data, and the data reception apparatus 32 for receiving the packet data have been described. However, the present invention can be also applied to the case where data transmission and reception apparatus capable of the transmission and the reception of packet data perform transmission and reception of packet data.

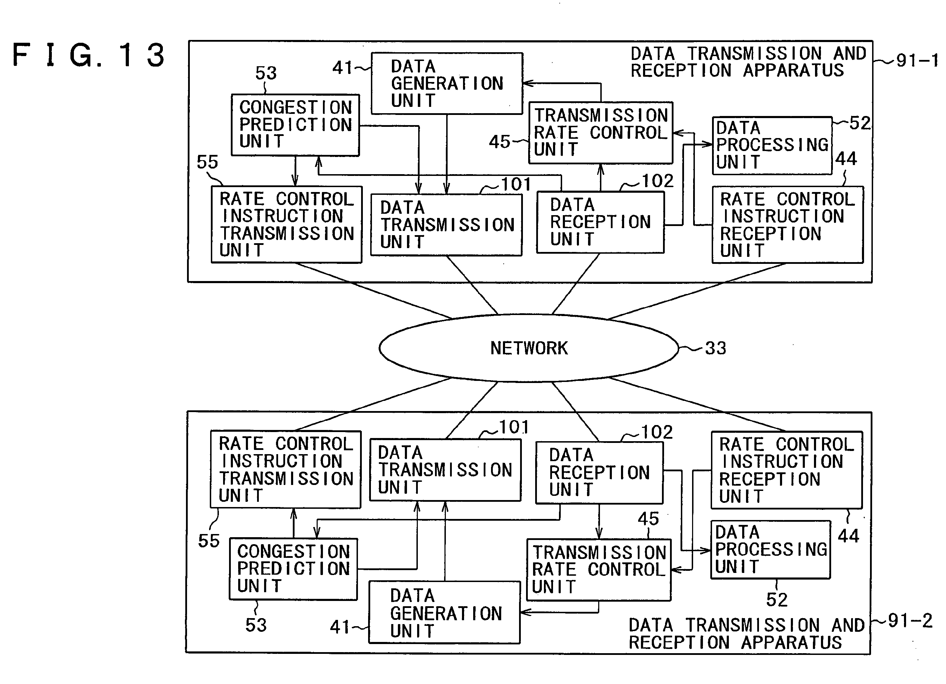

FIG. 13 is a block diagram showing the configurations of a data transmission and reception apparatus 91-1 and a data transmission and reception apparatus 91-2 which can perform transmission and reception of packet data in another example of the data communication system to which the present invention is applied.

It is noted that, the components corresponding to those in FIG. 2 are designated by the same reference marks as those in FIG. 2, the descriptions of the components will be suitably omitted.

That is, the data transmission and reception apparatus 91-1 and the data transmission and reception apparatus 91-2, which can perform transmission and reception, are severally provided with the data generation unit 41, the transmission rate control unit 45 and the rate control instruction reception unit 44 like the data transmission apparatus 31 described by the use of FIG. 2. Moreover, the data transmission and reception apparatus 91-1 and the data transmission and reception apparatus 91-2 are severally provided with the data processing unit 52, the congestion prediction unit 53 and the rate control instruction transmission unit 55 like the data reception apparatus 32.

Then, the data transmission and reception apparatus 91-1 and the data transmission and reception apparatus 91-2 are further severally provided with a data transmission unit 101 and a data reception unit 102. The data transmission unit 101 divides the data supplied from the data generation unit 41 into RTP packets, and adds SR packets to the RTP packets at a predetermined time interval. The data transmission unit 101 further transmits the RTP packets at a transmission rate controlled by the transmission rate control unit 45. When the data transmission unit 101 receives packet data (namely, when the data transmission unit 101 itself functions as an apparatus on the reception side), the data transmission unit 101 generates an RR packet to transmit the generated RR packet through the network 33. The data reception unit 102 receives RR packets by the RCTP transmitted from the transmitter of the packet data, and receives RTP packets and SR packets from another apparatus through the network 33. The data reception unit 102 further separates the data included in the SR packets and the RTP packets, and supplies the data of video, audio, text and the like to the data processing unit 52. Moreover, the data reception unit 102 supplies to the congestion prediction unit 53 the information necessary for estimating the congestion among the pieces of the information included in the RTP packet.

Incidentally, it is needless to say that the present invention can be also applied to the data transfer between the data transmission and reception apparatus 91-1 and the data transmission and reception apparatus 91-2, which are described with reference to FIG. 13, and the data transmission apparatus 31 or the data reception apparatus 32, which are described with reference to FIG. 2.

In such a way, the apparatus on the data reception side transmits a rate control instruction to the apparatus on the data transmission side by the use of the RTCP APP. Thereby, it is possible to realize the rate control by a simpler configuration than the case of using the RTCP RR packet or expanding the RR packet. Moreover, when the estimation of the congestion in the apparatus on the data reception side is advanced highly, there is no necessity for changing the configuration on the data transmission side.

The series of processing described above can be also executed by means of software. The software is installed in a computer in which the programs constituting the software are incorporated in dedicated hardware, in a general-purpose personal computer which can execute various functions by installing various programs therein, or the like from a recording medium.

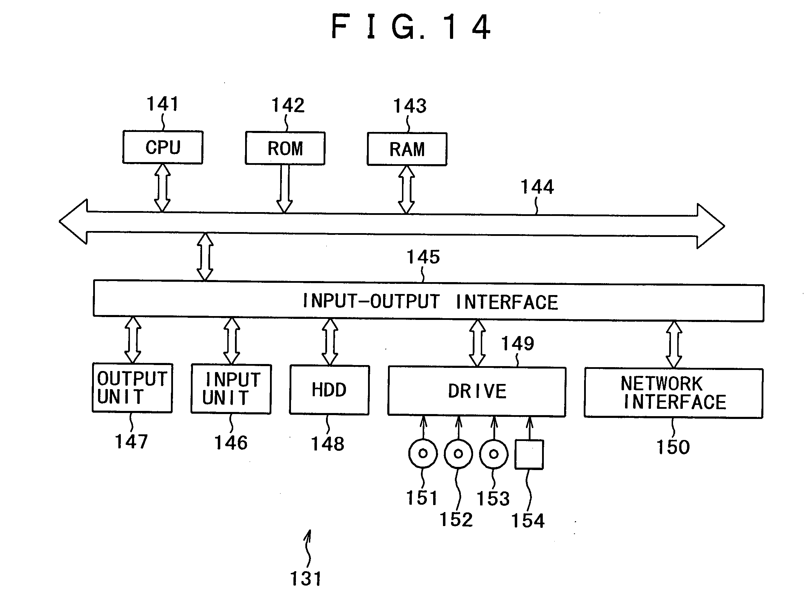

The recording medium is composed of, as shown in FIG. 14, a magnetic disk 151 (including flexible disk), an optical disk 152 (including a compact disk read-only memory (CD-ROM), and a digital versatile disk (DVD)), a magneto-optical disk (MO) 153 (including a mini disk (MD) (trade mark)), a package medium composed of a semiconductor memory 154, or the like which includes recorded programs and are distributed for supplying the programs to users independently from the computer.

FIG. 14 shows a configuration example of a personal computer 131 executing the processing described above. A central processing unit (CPU) 141 of the personal computer 131 executes various pieces of processing in conformity with the programs stored in a ROM 142, or the programs loaded from a hard disc drive (HDD) 148 to a random access memory (RAM) 143. The data or the like necessary for the execution of various pieces of processing by the CPU 141 is also suitably stored in the RAM 143.

The CPU 141, the ROM 142 and the RAM 143 are mutually connected through an internal bus 144. An input/output interface 145 is also connected to the internal bus 144.

To the input/output inter face 145, an input unit 146 composed of a keyboard, a mouse and the like, a display composed of a cathode ray tube (CRT), a liquid crystal display (LCD) or the like, an output unit 147 composed of a speaker or the like, the HDD 148 composed of a hard disk, and a network interface 150 composed of a modem, a terminal adapter, or the like are connected. The network interface 150 performs communication processing through the network 33 such as the Internet.

As the need arises, to the input/output interface 145, a drive 149, the magnetic disk 154, the optical disk 152, the magneto-optical disk 153, the semiconductor memory 154 or the like are suitably mounted. Computer programs read from the media are installed in the HDD 148 as the need arises.

Moreover, in the present specification, the steps describing the programs to be recorded on a recording medium of course includes the processing executed time serially along the described order. However, the steps include the processing executed in parallel or independently though the processing is not always executed time serially.

Incidentally, in the present specification, the system indicates the whole apparatus composed of a plurality of apparatus.

Various respective aspects and features of the invention are defined in the appended claims. Features from the dependent claims may be combined with features of the independent claims as appropriate and not merely as explicitly set out in the claims.

**Claims**

1. An information processing apparatus for receiving data from another information processing apparatus through a network, comprising:

   first reception means for receiving predetermined information including a transmission state of the data transmitted from said another information processing apparatus;
   congestion estimation means for estimating congestion of said network on a basis of the predetermined information received by said first reception means;
   control signal generation means for generating a first control signal for controlling a data transmission rate of said another information processing apparatus on a basis of whether the congestion is estimated or not by said congestion estimation means; and
   first transmission means for transmitting the first control signal generated by said control signal generation means to said another information processing apparatus.

2. The information processing apparatus according to claim 1, wherein:

   said congestion estimation means includes delay detection means for detecting a delay of data transmission in said network on a basis of the predetermined information received by said first reception means, and
   said control signal generation means generates the first control signal for controlling the data transmission rate of said another information processing apparatus on a basis of the delay of the data transmission detected by said delay detection means.

3. The information processing apparatus according to claim 2, wherein:

   said delay detection means detects the delay of the data transmission, in a case where a clock for data transmission processing in said another information processing apparatus described in the predetermined information and a clock used for said data reception processing in said delay detection means itself coincide, by means of these clocks as a first reference clock, and
   said delay detection means detects the delay of the data transmission, in a case where the clock for data transmission processing in said another information processing apparatus described in the predetermined information is different from the clock used for said data reception processing in said delay detection means itself, by means of a second reference clock different from said first reference clock.

4. The information processing apparatus according to claim 3, wherein:

the data is an RTP packet based on RFC 1889;
the first reference clock is NTP;
the second reference clock is a clock different from the first reference clock equipped in said delay detection means itself.

5. The information processing apparatus according to claim 3, further comprising reception time measurement means for measuring time when the predetermined information is received by said first reception means, wherein:

said delay detection means detects a relative delay of the data transmission on a basis of a plurality of pieces of reception time of the predetermined information measured by said reception time measurement means when the clock for the transmission processing of the data in said another information processing apparatus, the transmission processing described in the predetermined information, is different from the clock for the data reception processing, the clock equipped in said delay detection means, and when mapping functions of the second reference clock and the first reference clock cannot be calculated.

6. The information processing apparatus according to claim 2, wherein:

the data is composed of a packet in a predetermined size, and
the predetermined information includes information of a reception number of the packet and a number of packet losses.

7. The information processing apparatus according to claim 6, wherein:

said congestion estimation means further includes packet loss rate detection means for detecting a packet loss rate of the packet transmitted from said another information processing apparatus on a basis of the predetermined information received by said first reception means, and
said control signal generation means generates the first control signal for controlling the data transmission rate of said another information processing apparatus on a basis of the packet loss rate detected by said packet loss rate detection means in addition to the delay of the data transmission detected by said delay detection means.

8. The information processing apparatus according to claim 7, wherein:

said control signal generation means generates the first control signal for controlling the data transmission rate of said another information processing apparatus so as to lower when said delay detection means detects an increase of the delay of the data transmission equal to or more than a first predetermined quantity, or when said packet loss rate detection means detect the packet loss rate equal to or more than a second predetermined quantity.

9. The information processing apparatus according to claim 7, wherein:

said control signal generation means generates the first control signal for controlling the data transmission rate of said another information processing apparatus so as to raise when said delay detection means does not detect an increase of the delay of the data transmission equal to or more than a first predetermined quantity for a predetermined time, and when said packet loss rate detection means does not detect the packet loss rate equal to or more than a second predetermined quantity for the predetermined time.

10. The information processing apparatus according to claim 1, wherein:

said congestion estimation means includes a first congestion condition detection means for detecting a first condition for estimating the congestion of said network referring to a first time as a reference on a basis of the predetermined information; and
second congestion condition detection means for detecting a second condition for estimating the congestion of said network referring a second time as a reference on a basis of the predetermined information.

11. The information processing apparatus according to claim 10, wherein:

said control signal generation means generates the first control signal for controlling the data transmission rate of said another information processing apparatus so as to lower when said first congestion condition detection means and said second congestion condition detection means detect at least one of the first condition and the second condition.

**12.** The information processing apparatus according to claim 10, wherein:

said control signal generation means generates the first control signal for controlling the data transmission rate of said another information processing apparatus so as to raise when said first congestion condition detection means and said second congestion condition detection means do not detect the first condition and the second condition for a predetermined time.

**13.** The information processing apparatus according to claim 1, further comprising:

second transmission means for transmitting the data to said another information processing apparatus;
second reception means for receiving a second control signal for controlling the data transmission rate by said second transmission means from said another information processing apparatus; and
control means for controlling the data transmission rate transmitted from said second transmission means on a basis of the second control signal received by said second reception means.

**14.** The information processing apparatus according to claim 1 wherein the data is an RTP packet in conformity with RFC 1889.

**15.** An information processing method of an information processing apparatus for receiving data from another information processing apparatus through a network, comprising the steps of:

controlling reception of predetermined information including transmission status of the data, the information transmitted from said another information processing apparatus;
estimating congestion of said network on a basis of the predetermined information, the reception of which is controlled at the step of controlling reception; and
generating a control signal for controlling a data transmission rate of said another information processing apparatus on a basis of whether the congestion is estimated or not by processing of the step of estimating congestion.

**16.** A program for making a computer execute processing of receiving data from another information processing apparatus through a network, comprising the steps of:

controlling reception of predetermined information including transmission status of the data, the information transmitted from said another information processing apparatus;
estimating congestion of said network on a basis of the predetermined information, the reception of which is controlled at the step of controlling reception; and
generating a control signal for controlling a data transmission rate of said another information processing apparatus on a basis of whether the congestion is estimated or not by processing of the step of estimating congestion.

**17.** An information processing apparatus for executing processing of transmitting data to another information processing apparatus through a network, comprising:

transmission means for transmitting the data to said another information processing apparatus;
reception means for receiving a control signal for controlling a data transmission rate by said transmission means from said another information processing apparatus; and
control means for controlling the data transmission rate of the data transmitted by said transmission means on a basis of the control signal received by said reception means.

**18.** An information processing method of an information processing apparatus including transmission means for transmitting data to another information processing apparatus through a network, comprising the steps of:

controlling reception of a control signal for controlling a data transmission rate by said transmission means from said another information processing apparatus; and

controlling the data transmission rate in the data transmission by said transmission means on a basis of the control signal, the reception of which is controlled at the preceding step.

**19.** A program for making a computer execute processing of transmitting data to another information processing apparatus through a network by means of transmission means, comprising the steps of:

controlling reception of a control signal for controlling a data transmission rate by said transmission means from said another information processing apparatus; and

controlling the data transmission rate of data transmission by said transmission means on a basis of the control signal, the reception of which is controlled by processing at the preceding step.

**20.** A data communication system including a first information processing apparatus for receiving data from another information processing apparatus through a network, and a second information processing apparatus for transmitting data to another information processing apparatus through the network, wherein:

said first information processing apparatus comprising:

first reception means for receiving predetermined information including a transmission status of the data, the information transmitted from said second information processing apparatus;

congestion estimation means for estimating congestion of said network on a basis of the predetermined information received by said first reception means;

control signal generation means for generating a control signal for controlling a data transmission rate of said second information processing apparatus on a basis of whether the congestion is estimated or not by said congestion estimation means; and

first transmission means for transmitting the control signal generated by said control signal generation means to said second information processing apparatus, and

said second information processing apparatus comprising:

second transmission means for transmitting the predetermined information and the data to said first information processing apparatus;

second reception means for receiving the control signal for controlling the data transmission rate from said first information processing apparatus by said second transmission means; and

control means for controlling the data transmission rate of the data transmitted by said second transmission means on a basis of the control signal received by said second reception means.

# FIG. 1

TRANSMISSION SIDE TERMINAL — 1

DATA GENERATION UNIT — 11

DATA TRANSMISSION UNIT — 12

TRANSMISSION RATE CHANGE UNIT — 13

NETWORK BUFFER DATA QUANTITY CALCULATION UNIT — 14

RECEPTION REPORT RECEPTION UNIT — 15

NETWORK — 3

RECEPTION SIDE TERMINAL — 2

DATA RECEPTION UNIT — 21

DATA PROCESSING UNIT — 22

RECEPTION REPORT GENERATION UNIT — 23

RECEPTION REPORT TRANSMISSION UNIT — 24

EP 1 434 378 A2

18

# F I G. 2

DATA TRANSMISSION APPARATUS ～31

DATA GENERATION UNIT ～41

42
DATA TRANSMISSION UNIT

43
DATA RECEPTION UNIT

45
TRANSMISSION RATE CONTROL UNIT

44
RATE CONTROL INSTRUCTION RECEPTION UNIT

NETWORK ～33

DATA RECEPTION UNIT

DATA TRANSMISSION UNIT

CONGESTION PREDICTION UNIT

RATE CONTROL INSTRUCTION TRANSMISSION UNIT

51

54

53

55

DATA PROCESSING UNIT ～52

DATA RECEPTION APPARATUS ～32

EP 1 434 378 A2

# F I G. 3

| V=2 | P | RC | PT=SR=200 | length | } header |
|---|---|---|---|---|---|

| SSRC of sender |
|---|

| NTP timestamp, most significant word |
|---|
| NTP timestamp, least significant word |
| RTP timestamp |
| sender's packet count |
| sender's octet count |

sender info

| SSRC_1 (SSRC of first source) |
|---|
| fraction lost / cumulative number of packets lost |
| extended highest sequence number received |
| interarrival jitter |
| last SR (LSR) |
| delay since last SR (DLSR) |

report block 1

| SSRC_2 (SSRC of second source) |
|---|
| ⋮ |

report block 2

| profile-specific extensions |
|---|

EP 1 434 378 A2

# F I G. 4

| V=2 | P | RC | PT=SR=200 | length | }header |
|---|---|---|---|---|---|
| SSRC of packet sender | | | | | |
| SSRC_1 (SSRC of first source) | | | | | }report block 1 |
| fraction lost | | cumulative number of packets lost | | | |
| extended highest sequence number received | | | | | |
| interarrival jitter | | | | | |
| last SR (LSR) | | | | | |
| delay since last SR (DLSR) | | | | | |
| SSRC_2 (SSRC of second source) | | | | | }report block 2 |
| ⋮ | | | | | |
| profile-specific extensions | | | | | |

# F I G. 5

| V=2 | P | subtype | PT=APP=204 | length |
|---|---|---|---|---|
| SSRC/CSRC | | | | |
| name (ASCII) | | | | |
| application-dependent data<br>⋮ | | | | |

# FIG. 6

53 CONGESTION PREDICTION UNIT

81 — DATA ACQUISITION UNIT

84 RELATIVE DELAY INCREASE RATE OPERATION UNIT

TIMER ~83

82 — DATA OPERATION UNIT

PACKET LOSS RATE OPERATION UNIT

85

STATE TRANSMISSION CONTROL UNIT ~86

RECEPTION RATE SETTING UNIT ~87

EP 1 434 378 A2

# F I G. 7

DELAY

RECEPTION TIME

# F I G. 8

$D \leqq H1$ AND $L \leqq H2$

Up

$D \leqq H1$ AND $L \leqq H2$ FOR
TIME T IN HOLD STATE

$D > H1$ OR $L > H2$

$D > H1$ OR $L > H2$

TIME T DOES NOT
ELAPSE IN HOLD
STATE

Hold

Down

$D > H1$ OR $L > H2$

$D \leqq H1$ AND $L \leqq H2$

EP 1 434 378 A2

# F I G. 9

EP 1 434 378 A2

# F I G. 1 0

```
╭─────────────────────────────────────────╮
│ START STATISTICAL INFORMATION           │
│ GENERATION PROCESSING                    │
╰─────────────────────────────────────────╯
                     │
        ┌────────────┴─────────────┐
  NO    ╱                          ╲   ~S11
 ◄──────◄   IS PACKET RECEIVED ?    ►
        ╲                          ╱
         └────────────┬─────────────┘
                      │ YES
        ┌─────────────┴─────────────┐
        │ RECORD RECEPTION TIME     │ ~S12
        └─────────────┬─────────────┘
                      │
        ┌─────────────┴─────────────┐
        │ CALCULATE ONE-WAY DELAY   │
        │ TIME, NUMBER OF PACKET    │
        │ LOSS, NUMBER OF RECEIVED  │ ~S13
        │ PACKETS, AND NUMBER OF    │
        │ RECEIVED BYTES            │
        └─────────────┬─────────────┘
                      │
        ┌─────────────┴─────────────┐
        │ UPDATE RESPECTIVE         │ ~S14
        │ TOTAL SUM                 │
        └─────────────┬─────────────┘
```

# F I G. 1 1

```
        ( START RATE CONTROL PROCESSING )
                        │
                        ▼
        ┌──────────────────────────────┐
        │     SET CONTROL STATE        │
        │      TO HOLD STATE           │─S31
        └──────────────────────────────┘
                        │
    ┌───────────────────┼───────────────────────┐
    │                   ▼                        │
    │   ┌──────────────────────────────┐         │
    │   │ CALCULATE PACKET LOSS RATE   │─S32     │
    │   │ ON STATISTICAL  INFORMATION  │         │
    │   └──────────────────────────────┘         │
    │                   │                        │
    │                   ▼                        │
    │   ┌──────────────────────────────┐         │
    │   │ CALCULATE AVERAGE RELATIVE   │         │
    │   │ DELAY  INCREASE RATE ON      │─S33     │
    │   │ STATISTICAL  INFORMATION     │         │
    │   └──────────────────────────────┘         │
    │                   │                        │
    │                   ▼                        │
    │        ⟨ IS FIXED TIME PASSED ⟩─S34        │
    │        ⟨  IN SAME STATE ?     ⟩────────────┘
    │                   │         NO
    │                   │YES
    │                   ▼
    │   ┌──────────────────────────────┐
    │   │ TRANSFER STATE ON CALCULATION│─S35
    │   │ RESULT AS OCCASION DEMANDS   │
    │   └──────────────────────────────┘
    │                   │
    │        NO         ▼
    │◄──────── ⟨ IS BIT RATE CHANGED ? ⟩─S36
    │                   │YES
    │                   ▼
    │   ┌──────────────────────────────┐
    │   │ OPERATE BIT RATE TO TRANSMIT │─S37
    │   │ RATE CONTROL INSTRUCTION     │
    │   └──────────────────────────────┘
    │                   │
    └───────────────────┘
```

# F I G. 1 2

```
        ┌──────────────────────────┐
        │    START TRANSMISSION     │
        │   RATE CHANGE PROCESS     │
        └──────────────────────────┘
                    │
       ┌────────────┼───────────────────┐
       │            ▼                    │
  NO  ╱   IS RATE CONTROL          ╲     S51
 ◄────   INSTRUCTION RECEIVED ?     ╲
       ╲                           ╱
                    │
                    │ YES
                    ▼
       ┌────────────────────────────┐
       │ CONTROL DATA GENERATION     │
       │ QUANTITY FOR CONTROLLING    │  S52
       │ TRANSMISSION RATE ON RATE   │
       │ CONTROL INSTRUCTION         │
       └────────────────────────────┘
```

# F I G. 1 3

DATA TRANSMISSION AND RECEPTION APPARATUS ~91-1

53 CONGESTION PREDICTION UNIT

41~ DATA GENERATION UNIT

TRANSMISSION RATE CONTROL UNIT 45~

DATA PROCESSING UNIT ~52

55 RATE CONTROL INSTRUCTION TRANSMISSION UNIT

DATA TRANSMISSION UNIT ~101

DATA RECEPTION UNIT ~102

RATE CONTROL INSTRUCTION RECEPTION UNIT 44

NETWORK ~33

RATE CONTROL INSTRUCTION TRANSMISSION UNIT

DATA TRANSMISSION UNIT ~101

DATA RECEPTION UNIT ~102

RATE CONTROL INSTRUCTION RECEPTION UNIT

55

CONGESTION PREDICTION UNIT

DATA GENERATION UNIT

TRANSMISSION RATE CONTROL UNIT 45

DATA PROCESSING UNIT 44

52

53 41~

DATA TRANSMISSION AND RECEPTION APPARATUS ~91-2

EP 1 434 378 A2

# F I G. 1 4

141　　　　142　　　　143

| CPU | ROM | RAM |

144

145

INPUT-OUTPUT INTERFACE

149

| OUTPUT UNIT | INPUT UNIT | HDD | DRIVE | NETWORK INTERFACE |

147　　　146　　　148

151　　153

152　　154

150

131

EP 1 434 378 A2